# EUROPEAN PATENT APPLICATION

(11) **EP 4 451 609 A1**
(43) Date of publication of application: **23.10.2024**
(21) Application number: 22906378.9
(22) Date of filing: 08.12.2022
(51) Int. Cl.: H04L 9/32

(54) **FUSION METHOD FOR QKD DEVICE AND CLASSIC DEVICE, AND ALL-IN-ONE DEVICE**

(30) Priority: 17.12.2021 CN 202111566288
(71) Applicant: Quantumctek Co., Ltd., Hefei, Anhui 230088 (CN)
(72) Inventor: TANG, Shibiao, Hefei, Anhui 230088 (CN); GAO, Song, Hefei, Anhui 230088 (CN); LI, Shuai, Hefei, Anhui 230088 (CN); WU, Hongyu, Hefei, Anhui 230088 (CN)
(74) Representative: Detken, Andreas
(86) International application number: PCT/CN2022/137441
(87) International publication number: WO 2023/109630

(57) **Abstract**

Disclosed in the present invention are a fusion method for a QKD device and a classic device, and an all-in-one device. By optimizing interface configuration and an internal light path of a typical QKD device, the number of interfaces required by the device is reduced to the maximum extent, such that the size of the QKD device is reduced to allow the QKD device to adapt to the volume requirements of the fusion of different classic devices to the QKD device, and hence the QKD device is allowed to be flexibly fused with different classic devices on the basis of configuring a device interface as a standard universal interface, and the all-in-one device with the quantum key distribution and encryption and decryption functions at the same time is obtained. The method for fusing the optimized QKD device and the classic device further provides a safe working mechanism so as to ensure the safe operation of the all-in-one device.

## Description

The present application claims priority to Chinese Patent Application No. 202111566288.5, titled "FUSION METHOD FOR QKD DEVICE AND CLASSIC DEVICE, AND ALL-IN-ONE DEVICE", filed on December 17, 2021 with the China National Intellectual Property Administration, which is incorporated herein by reference in its entirety.

### FIELD

The present disclosure relates to the field of quantum secure communication, and in particular to a method for integrating a QKD device with a classical device, and an integrated device formed by the method.

### BACKGROUND

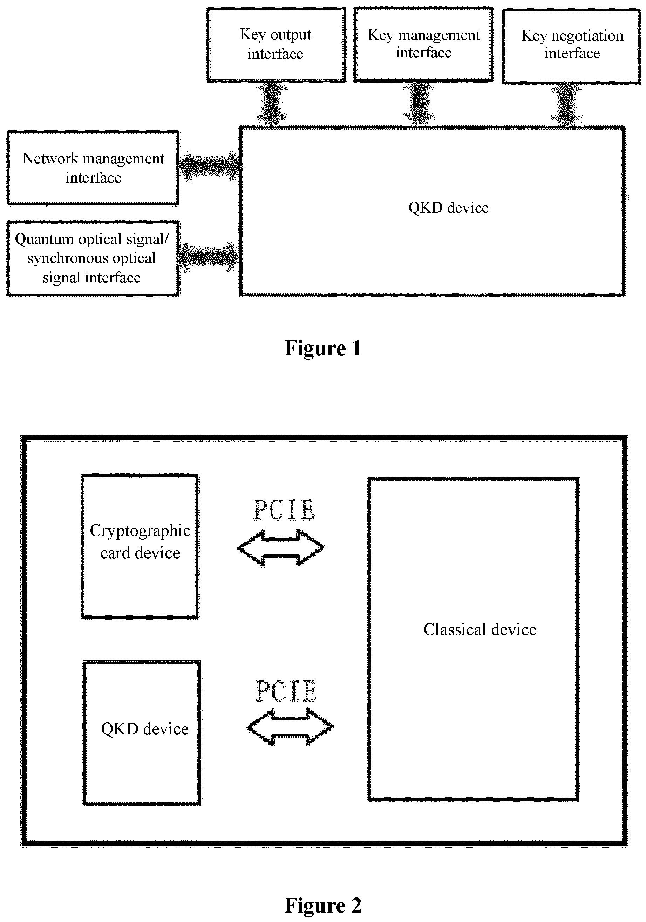

In order to implement a quantum key distribution (QKD) process, a QKD device communicates various signals such as a quantum optical signal, a synchronous optical signal, a negotiation signal, a quantum key, key management information and device status information. Therefore, a conventional QKD device is generally provided with a variety of hardware interfaces to serve as corresponding data interfaces. As shown in Figure 1, a typical conventional QKD device is provided with five hardware interfaces including a key output interface for outputting a quantum key, a key management interface for sending and receiving key management data, a key negotiation interface for sending and receiving key negotiation data, a network management interface for sending and receiving network management data, and an optical interface for quantum optical signal/synchronous optical signal. This complex hardware interface structure requires a relatively large device size, and is difficult to satisfy an adaptation requirement of different types of classical devices for hardware interfaces, bringing a difficulty in integrating the QKD device with the classical device, and limiting the application of quantum secure communication technology.

### SUMMARY

In view of the above problems existing in the prior art, according to the present disclosure, an interface configuration and an internal optical path of a classical QKD device are optimized, the number of interfaces required by the device is reduced to the maximum extent, and a size of the QKD device is reduced to adapt for a requirement for the volume of the OKD device to be integrated with different classical devices. Thus, on the basis of configuring the device interface as a standard universal interface, the QKD device can be flexibly integrated with different classical devices quickly, and an integrated device with both a quantum key distribution function and an encryption and decryption function is obtained. In the method for integrating the optimized QKD device with the classical device, a secure operation mechanism is further provided to ensure a secure operation of the integrated device.

In a first aspect of the present disclosure, a method for integrating a QKD device with a classical device is provided, and the method includes:
a hardware docking step of respectively connecting the QKD device and a cryptographic card device to the classical device by means of universal interfaces to perform data communication;
an identity authentication step of authenticating the classical device by the QKD device, and performing a quantum key obtaining step and a service encryption and decryption step in a case of passing an identity authentication;
the quantum key obtaining step of providing a quantum key to the cryptographic card device, wherein the quantum key is generated by the QKD device; and
the service encryption and decryption step of generating encrypted service data and decrypting the encrypted service data by the cryptographic card device using the quantum key;
wherein the service data is used by the classical device to conduct service; and
the QKD device is provided with one universal interface used to perform external digital signal communication, and the QKD device is configured to multiplex different types of data into a same digital signal, and the different types of data have different protocol frame formats.

Further, the data in the QKD device includes the quantum key, key management data, network management data and device status information data.

Further, the quantum key obtaining step further includes determining whether the number of the quantum keys in the QKD device satisfies the service requirement; and
generating the quantum key by the QKD device through a quantum key distribution process in a case that the number of the quantum keys does not satisfy the service requirement.

Further, the quantum key obtaining step includes outputting the quantum key to the classical device by the QKD device through the universal interface, and obtaining the quantum key from the classical device by the cryptographic card device through the universal interface.

Preferably, the universal interface is a PCIE interface.

Further, the cryptographic card device includes an operating system layer, a PCIE drive layer and an API interface layer;
the operating system layer is configured to manage a hardware resource, and control external data exchange and an encryption and decryption operation; and
the PCIE drive layer is configured to perform data exchange between the API interface layer and the hardware resource.

In a second aspect of the present disclosure, an integrated device with a quantum key distribution function and a secure communication function is provided, and the integrated device includes a QKD device, a cryptographic card device and a classical device; wherein
the classical device is configured to send and receive encrypted service data to conduct service by using the service data, and is provided with at least two universal interfaces;
the QKD device is configured to generate and output a quantum key, the QKD device is provided with one universal interface used to perform external digital signal communication, and the QKD device is configured to multiplex different types of data into a same digital signal, and the different types of data have different protocol frame formats;
the cryptographic card device is configured to generate and decrypt the encrypted service data by using the quantum key, and is provided with a universal interface;
the QKD device and the cryptographic card device are respectively connected to the classical device through universal interfaces, and the classical device is configured to obtain the quantum key from the QKD device and provide the quantum key to the cryptographic card device.

Further, the QKD device is further configured to authenticate the classical device; and/or, the data in the QKD device includes the quantum key, key management data, network management data, and device status information data.

Preferably, the universal interface is a PCIE interface.

Further, the QKD device is provided with one universal interface used to perform external optical signal communication; and,
the QKD device includes a classical-quantum wavelength division multiplexing module configured to perform wavelength division multiplexing on a quantum optical signal, a synchronous optical signal and a negotiation optical signal into a signal light, or de-multiplex the signal light for the quantum optical signal, the synchronous optical signal and the negotiation optical signal that are included in the signal light through wavelength division multiplexing.

Further, the QKD device further includes a photoelectric converter configured to perform a conversion between the negotiation optical signal and the negotiation electrical signal.

### BRIEF DESCRIPTION OF THE DRAWINGS

The embodiments of the present disclosure will be described in detail below in conjunction with the drawings.

In order to more clearly illustrate the technical solutions in the embodiments of the present disclosure or the prior art, the drawings required in the description of the embodiments or the prior art will be briefly introduced hereinafter. Apparently, the drawings in the following description merely show some embodiments of the present disclosure, those skilled in the art may obtain other drawings based on these drawings without creative efforts.
Figure 1 shows a typical structure of a QKD device in the prior art;
Figure 2 shows exemplarily a schematic structural diagram of an integrated device according to the present disclosure;
Figure 3 shows a schematic block diagram of a cryptographic card device of an integrated device according to the present disclosure; and
Figure 4 shows exemplarily a flowchart of a method for integrating a QKD device with a classical device according to the present disclosure.

### DETAILED DESCRIPTION

Hereinafter, exemplary embodiments of the present disclosure will be described in detail with reference to the drawings. The following embodiments are provided by way of illustration in order to fully convey the spirit of the present disclosure to those skilled in the art to which the present disclosure relates. Therefore, the present disclosure is not limited to the embodiments disclosed herein.

Figure 2 shows an exemplary structure of an integrated device according to the present disclosure, and the integrated device includes a QKD device, a cryptographic card device, and a classical device.

Those skilled in the art can understand that the classical device may be any device that does not have a quantum key distribution function and a quantum key encryption function, and the classical device performs a corresponding service function by performing the service data communication with a peer device.

Generally, the classical device is provided with a standard universal interface such as a PCIE interface for performing external digital signal communication. For example, as shown in Figure 2, the classical device may be provided with at least two standard universal interfaces.

The QKD device is configured to perform a quantum key distribution process to generate a quantum key, as well as to manage the quantum key.

To facilitate integrating with the classical device, the QKD device according to the present disclosure may be provided with a minimum number of interfaces and an optimized internal optical path structure to allow for a small device volume, while facilitating hardware connection with the classical device.

Specifically, the QKD device is provided with only one interface for performing external digital signal communication, and the interface is a standard universal interface such as a PCIE interface. Thus, by means of a standard universal interface at the QKD device and a standard universal interface at the classical device, the hardware connection between the QKD device and the classical device can be implemented conveniently and a digital signal communication channel between the QKD device and the classical device can be provided.

Therefore, the QKD device may be configured to multiplex various types of data generated during its operation process into a same digital signal, thus satisfying the communication requirement of the various types of digital data by means of a single interface. Specifically, the QKD device may define a corresponding protocol frame format for different types of data, so that the different types of data are sent out to a host device (for example, the classical device) through a same universal interface by means of the same digital signal. After receiving the digital signal, the host device may decompose the frame through different protocol frame formats, separate different types of data from the same digital signal, and make a corresponding response. Generally, the type of data in the QKD device includes, but is not limited to, a quantum key, key management data, network management data, and various device status data (such as temperature, abnormal information and the like), and so on.

In this case, those skilled in the art can understand, by providing universal interfaces for various digital data on the QKD device, the number of interfaces and internal circuits for the interfaces may be reduced when compared with a typical QKD device, thereby allowing for reduction of the QKD device space required by arranging multiple digital signal interfaces and internal circuits, and miniaturizing the QKD device.

In order to further miniaturize the QKD device and make it more flexibly satisfy the requirement of the device volume for integration of various classical devices, the QKD device according to the present disclosure is provided with only one optical interface used for performing external optical signal communication, so as to reduce the QKD device space required by arranging multiple optical signal interfaces and internal optical paths to miniaturize the QKD device.

Specifically, the QKD device may include a photoelectric converter for directly converting a negotiation electrical signal to a negotiation optical signal (or converting the negotiation optical signal to the negotiation electrical signal). In addition, the QKD device is further provided with a classical-quantum wavelength division multiplexing module, and the classical-quantum wavelength division multiplexing module is configured to multiplex the quantum optical signal, synchronous optical signal and negotiation optical signal generated in the QKD device into a same optical signal in a wavelength division multiplexing manner, thereby allowing using a single optical channel and a single optical interface to implement the various optical signal communication, or to de-multiplex the received signal light including the quantum optical signal, the synchronous optical signal and the negotiation optical signal in the wavelength division multiplexing manner, so that various optical signals can be applied in the quantum key distribution process.

In an embodiment, for the optical interface of the QKD device, an LC/UPC interface may be used.

In view of the above, by reducing the number of peripheral interfaces of the QKD device, and simplifying an optical path structure and a circuit structure in the QKD device, the size of the QKD device can be greatly reduced. For example, the two-dimensional plane size (length/width) of the QKD device may be further reduced to 120mm*220mm. As a result, the QKD device can better satisfy the volume requirement when integrated with different classical devices.

The cryptographic card device is configured to encrypt and decrypt the service data using the quantum key. According to the present disclosure, the cryptographic card device is also provided with a standard universal interface, and the standard universal interface is used to make a hardware connection with the classical device for data communication, such as obtaining a quantum key from the classical device, and performing service data exchange with the classical device and the like.

Specifically, after the QKD device outputs the quantum key to the classical device through the universal interface, the cryptographic card device may obtain the quantum key from the classical device through the universal interface.

In a case that the classical device sends service data to a peer device, the classical device may output the service data to the cryptographic card device, and the cryptographic card device encrypts the service data by using the quantum key and returns the encrypted service data to the classical device, so that the classical device is allowed to perform service data communication with the peer device in an encrypted manner.

Similarly, in a case that the classical device receives the encrypted service data from the peer device, the classical device outputs the encrypted service data to the cryptographic card device, and the cryptographic card device decrypts the encrypted service data using the quantum key and returns the plaintext of the service data to the classical device. Therefore, the classical device can conduct a corresponding service by using the service data.

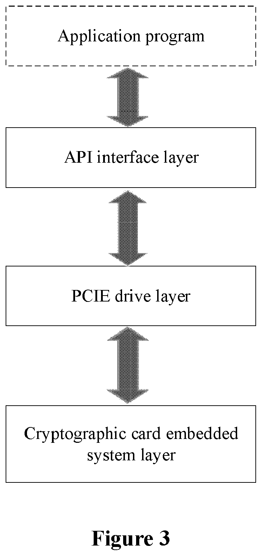

Figure 3 shows exemplarily a block structure of a cryptographic card device according to the present disclosure. As shown in Figure 3, the cryptographic card device may include an operating system layer, a PCIE drive layer, and an API interface layer.

The operating system layer is configured to manage hardware resources, control external data exchange and encryption and decryption operations. Preferably, the operating system layer may be embedded.

The PCIE drive layer is used to allow for data exchange between the API interface layer and hardware resources. For example, the PCIE drive layer may provide a drive program under mainstream operating systems such as Windows, Linux, and so on.

The API interface layer is configured to provide an API function programming interface to support a customized programming interface and a standard algorithm interface for being called by an application program.

Therefore, the cryptographic card device can perform data communication with the classical device through the PCIE interface, and in addition, the cryptographic card device can encrypt and decrypt the service data by using the quantum key.

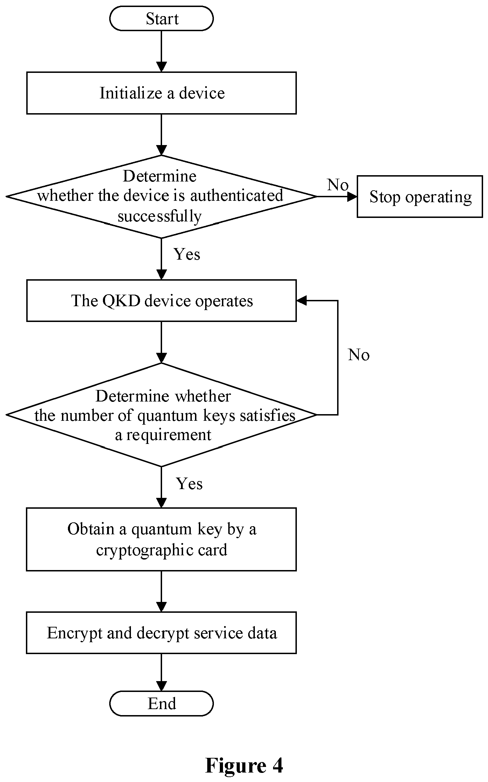

Figure 4 shows exemplarily a flowchart of a method for integrating according to the present disclosure

The method for integrating according to the present disclosure may include a hardware docking step, an identity authentication step, a quantum key obtaining step and a service encryption and decryption step.

In the hardware docking step, the QKD device and the cryptographic card device are connected to the classical device to make a hardware connection by using a standard universal interface at the QKD device, a standard universal interface at the cryptographic card device and a standard universal interface at the classical device, respectively, so as to form an integrated device. The communication of data such as the quantum key may be implemented between the QKD device and the classical device through the standard universal interface, and the communication of data such as the quantum key and service data may be implemented between the cryptographic card device and the classical device through the standard universal interface.

After the hardware connection of the integrated device is made, it starts initializing the device.

Subsequently, in the identity authentication step, the QKD device authenticates the classical device connected to the QKD device to determine whether an identity of the classical device is legal.

In the method for integrating according to the present disclosure, only in a case that the QKD device determines that the identity of the classical device is legal, the subsequent quantum key obtaining step and service encryption and decryption step are performed, otherwise, it stops the operation.

In the quantum key obtaining step, the QKD device first determines whether the number of the quantum keys stored in the QKD device satisfies the current service requirement according to the current service requirement for quantum keys. In a case of determining that the number of the quantum keys cannot satisfy the requirement, it starts the quantum key distribution process to generate a quantum key, until the number of the quantum keys provided satisfies the service requirement.

The QKD device outputs the quantum key to the classical device through the universal interface, and the classical device forwards the quantum key to the cryptographic card device.

In the service encryption and decryption step, the cryptographic card device encrypts the service data from the classical device by using the quantum key and returns the encrypted service data to the classical device, or decrypts the encrypted service data from the classical device and returns the plaintext of the service data to the classical device. Thus, the integrated device can provide the quantum secure communication function.

In view of the above, according to the present disclosure, the method for integrating the QKD device with the classical device is provided, the interface configuration and the internal optical path of a typical QKD device are optimized, the number of interfaces required by the device is reduced to the maximum extent, so that the size of the QKD device is reduced to adapt to the requirement for the volume of the OKD device to be integrated with different classical devices. Thus, on the basis of configuring the device interface as a standard universal interface, the QKD device can be flexibly integrated with different classical devices quickly, and an integrated device with both a quantum key distribution function and an encryption and decryption function is obtained. By performing a quantum key obtaining operation, and an encryption and decryption operation on the basis of identity authentication, the secure operation of the integrated device can be effectively ensured.

Although the present disclosure has been described above through specific embodiments in conjunction with the drawings, those skilled in the art can easily recognize that the above-mentioned embodiments are only exemplary and are used to illustrate the principles of the present disclosure, rather than limiting the scope of the present disclosure. Those skilled in the art may make various combinations, modifications, and equivalent substitutions to the above-mentioned embodiments without departing from the spirit and scope of the present disclosure.

## Claims

1. A method for integrating a QKD device with a classical device, comprising:
a hardware docking step of respectively connecting the QKD device and a cryptographic card device to the classical device by means of universal interfaces to perform data communication;
an identity authentication step of authenticating the classical device by the QKD device, and performing a quantum key obtaining step and a service encryption and decryption step in a case of passing an identity authentication;
the quantum key obtaining step of providing a quantum key to the cryptographic card device, wherein the quantum key is generated by the QKD device; and
the service encryption and decryption step of generating encrypted service data and decrypting the encrypted service data by the cryptographic card device using the quantum key;
wherein the service data is used by the classical device to conduct service; and
the QKD device is provided with one universal interface configured to perform external digital signal communication, and the QKD device is configured to multiplex different types of data into a same digital signal, and the different types of data have different protocol frame formats.

2. The method according to claim 1, wherein the data in the QKD device comprises the quantum key, key management data, network management data and device status information data.

3. The method according to claim 1, wherein the quantum key obtaining step further comprises:
determining whether the number of the quantum keys in the QKD device satisfies service requirement; and
generating the quantum key by the QKD device through a quantum key distribution process in a case that the number of the quantum keys does not satisfy the service requirement.

4. The method according to claim 3, wherein the quantum key obtaining step comprises outputting the quantum key to the classical device by the QKD device through the universal interface, and obtaining the quantum key from the classical device by the cryptographic card device through the universal interface.

5. The method according to any one of claims 1 to 4, wherein the universal interface is a PCIE interface.

6. The method according to claim 5, wherein the cryptographic card device comprises an operating system layer, a PCIE drive layer and an API interface layer;
the operating system layer is configured to manage a hardware resource, and control external data exchange and an encryption and decryption operation; and
the PCIE drive layer is configured to perform data exchange between the API interface layer and the hardware resource.

7. An integrated device with a quantum key distribution function and a secure communication function, comprising a QKD device, a cryptographic card device and a classical device; wherein
the classical device is configured to receive and send encrypted service data to conduct service by using the service data, and is provided with at least two universal interfaces;
the QKD device is configured to generate and output a quantum key, the QKD device is provided with one universal interface configured to perform external digital signal communication, and the QKD device is configured to multiplex different types of data into a same digital signal, and the different types of data have different protocol frame formats;
the cryptographic card device is configured to generate and decrypt the encrypted service data by using the quantum key, and is provided with a universal interface; and
the QKD device and the cryptographic card device are respectively connected to the classical device through universal interfaces, and the classical device is configured to obtain the quantum key from the QKD device and provide the quantum key to the cryptographic card device.

8. The integrated device according to claim 7, wherein the QKD device is further configured to authenticate the classical device; and/or, the data in the QKD device comprises the quantum key, key management data, network management data, and device status information data.

9. The integrated device according to claim 7, wherein the universal interface is a PCIE interface.

10. The integrated device according to claim 7, the QKD device is provided with one universal interface configured to perform external optical signal communication; and,
the QKD device comprises a classical-quantum wavelength division multiplexing module configured to perform wavelength division multiplexing on a quantum optical signal, a synchronous optical signal and a negotiation optical signal into a signal light, or de-multiplex the signal light for the quantum optical signal, the synchronous optical signal and the negotiation optical signal that are included in the signal light through wavelength division multiplexing.

11. The integrated device according to claim 10, wherein the QKD device further comprises a photoelectric converter configured to perform a conversion between the negotiation optical signal and the negotiation electrical signal.
